# EUROPÄISCHE PATENTSCHRIFT

(11) **EP 1 569 574 B1**
(45) Veröffentlichungstag und Bekanntmachung des Hinweises auf die Patenterteilung: **04.03.2009**
(21) Anmeldenummer: 03775202.9
(22) Anmeldetag: 20.10.2003
(51) Int. Cl.: A61C 3/025, B24C 5/00

(54) **KANÜLE FÜR EIN MEDIZINISCHES ODER DENTALMEDIZINISCHES HANDSTÜCK ZUM AUSSPRÜHEN EINES ABRASIVEN STRÖMUNGSMITTELS**
CANNULA FOR A MEDICAL OR DENTAL MEDICAL HANDPIECE USED FOR SPRAYING AN ABRASIVE FLOW MEDIUM
CANULE POUR UNE PIECE A MAIN MEDICALE OU MEDICO-DENTAIRE POUR PULVERISER UNE SUBSTANCE D'ECOULEMENT ABRASIVE

(30) Priorität: 23.10.2002 EP 02011866
(43) Veröffentlichungstag der Anmeldung: 07.09.2005
(73) Patentinhaber: Kaltenbach & Voigt GmbH, 88400 Biberach (DE)
(72) Erfinder: WIEK, Hans-Dieter, 88454 Hochdorf (DE); MOHN, Uwe, 89601 Schelklingen (DE); GUGEL, Bernd, 89079 Ulm (DE)
(74) Vertreter: Schmidt-Evers, Jürgen
(86) Internationale Anmeldenummer: PCT/EP2003/011600
(87) Internationale Veröffentlichungsnummer: WO 2004/037109

(56) Entgegenhaltungen:
- EP-A- 0 810 038
- DE-A- 4 123 019
- DE-A- 19 723 386
- US-A- 4 776 794
- US-A- 5 967 779
- US-A- 6 149 509
- US-A1- 2002 137 006
- US-B1- 6 315 565

## Beschreibung

Die Erfindung bezieht sich auf eine Kanüle zum Behandeln des menschlichen oder tierischen Körpers mit einem abrasiven Strömungsmittel. Hierbei handelt es sich vorzugsweise um ein gasförmiges Strömungsmittel, insbesondere Luft bzw. Druckluft, dem abrasive Partikel, z.B. ein abrasives Pulver, beigemischt werden. Die Kanüle besteht aus einem Kanülenfuß, einem sich davon nach vorne erstreckenden Kanülenschaft und eine Auslassdüse, die im vorderen Endbereich des Kanülenschafts angeordnet und seitwärts gerichtet ist. Hierdurch wird die vor der Auslassdüse angeordnete Behandlungsstelle nur geringfügig von der Kanüle selbst verdeckt, und der Behandler hat einen guten Zugang und eine gute Sicht auf die Behandlungsstelle, auch wenn diese sich in einer Körperhöhle des Körpers befindet, wie z.B. im Mundraum eines Patienten.

Das abrasive Strömungsmittel wird unter Druck aus der Auslassdüse ausgesprüht, und es kann dazu benutzt werden, Verunreinigungen der Oberfläche abzutragen, wobei die Oberfläche selbst schonend behandelt wird. Es ist aber auch möglich, die Oberfläche selbst abrasiv zu bearbeiten, um z.B. Material von der Oberfläche selbst abzutragen. Dabei ist die Wirksamkeit des Strömungsmittels von der Abrasivität der in sie eingemischten Partikel abhängig.

Zu einer vorliegenden Kanüle gehört ein Handstück oder Handinstrument, von dem die Kanüle nach vorne absteht, und das einen Träger für die Kanüle bildet. Im Funktionsbetrieb wird das Handstück vom Behandler manuell ergriffen und mit der Kanüle zur und an der Behandlungsstelle bewegt. Bei den meisten bekannten Handstücken der vorliegenden Art werden die abrasiven Partikel dem Luftstrom während des Durchströmens des Handstücks aus einem am Handstück angeordneten Vorratsbehälter beigemischt.

Bei einer ersten Art der Kanüle und des zugehörigen Handstücks besteht das Strömungsmittel aus Luft bzw. Druckluft, den abrasiven Partikeln und Wasser, das dem Gemisch aus Luft und Partikel im Bereich der Auslassdüse zugemischt wird, wobei die abrasiven Partikel aus einem Material bestehen, das sich bei einer Benetzung mit Wasser nach wenigen Sekunden löst. Ein solches Strömungsmittel eignet sich insbesondere zum Reinigen einer Oberfläche von Verunreinigungen.

Beim dentalmedizinischen Einsatz können Verunreinigungen von Zahnoberflächen, z.B. Plaque und Oberflächenverfärbungen, die z.B. durch Rauchen verursacht sein können, entfernt werden. Die abrasiven Partikel können z.B. aus Natriumbicarbonat NaHCO₃ (auch Natriumhydrogencarbonat genannt) bestehen. Eine Kanüle mit einem zugehörigen Handinstrument dieser ersten Art ist z.B. in der EP 0 834 291 B1 beschrieben.

Bei einer zweiten Art der vorliegenden Kanüle und zugehöriges Handstück werden Partikel verwendet, die von größerer Abrasivität sind und aus in Wasser unlösbarem Material bestehen, z.B. Aluminiumoxid (Al₂O₃) oder Korund-Körner. Solche abrasiven Partikel können das Strömungsmittel nur mit Luft, d.h. ohne Wasser, bilden, so dass eine Wasserzuführung entfallen kann.

Eine Kanüle sowohl der ersten als auch der zweiten Art unterliegt in ihrem Funktionsbetrieb einem Verschleiß, der durch die sie durchströmenden abrasiven Partikel hervorgerufen wird. Dieser Verschleiß findet insbesondere im Bereich des Scheitels zwischen den beiden Zuführungskanalabschnitten aufgrund der erzwungenen Richtungsänderung des Strömungsmittels statt.

Eine Kanüle für ein medizinisches Handstück ist aus dm Dokument US 6,149,509 bekannt. Im vorderen Endbereich weist die Kanüle eine seitwärts gerichtete Auslassdüse auf. Zur Auslassdüse führen zwei Zuführungsleitungen, die in einem hinteren Bereich der Kanüle parallel angeordnet sind.

Der Erfindung liegt die Aufgabe zu Grunde, eine Kanüle der im Oberbegriff des Anspruchs 1 angegebenen Art so auszugestalten, dass eine einfache und kleine Bauweise erreicht wird.

Diese Aufgabe wird durch die Merkmale des Anspruchs 1 gelöst. Vorteilhafte Weiterbildungen der Erfindung sind in den zugehörigen Unteransprüchen beschrieben.

Bei der Ausgestaltung nach Anspruch 1 lässt sich aufgrund der koaxialen Anordnung wenigstens eines Abschnitts der zweiten Zuführungsleitung nicht nur eine kompakte Bauweise, sondern auch eine einfache Bauweise erreichen, da aufgrund der geraden Erstreckung der Kanalhülse eine einfache vorgefertigte Kanalhülse benutzt und durch Einschieben montiert werden kann.

Da eine Kanüle mit einem zugehörigen Handstück bei verschiedenen Patienten verwendet werden kann, ist für Hygiene und dafür zu sorgen, dass Verschmutzungen oder Krankheitserreger auf den nächsten Patienten nicht übertragen werden können. Ein besonderer Gefahrenbereich ist hier unter anderem insbesondere die Wasser-Zuführungsleitung, in der sich Verschmutzungen oder Krankheitserreger besonders leicht fortbewegen und somit nach hinten transportiert werden können. Dies gilt auch für die abrasiven Partikel insbesondere dann, wenn sie aus wasserunlöslichem Material bestehen, aber auch dann, wenn sie aus wasserlöslichem Material bestehen, weil im letzteren Fall das Wasser durch die Auflösung verändert wird. Sowohl die Partikel selbst als auch das Wasser nach deren Auflösung können empfindliche Bauteile im rückwärts gelegenen Bereich der Kanüle oder auch eines damit verbundenen Handstücks, z.B. eine lösbare Verbindung zwischen der Kanüle und dem Handstück oder eine lösbare Verbindung zwischen dem Handstück und einer zugehörigen Versorgungsleitung, verschmutzen und auch die Funktion beeinträchtigen.

Vorteilhaft ist ein Rückström-Sperrventil in der Wasser-Zuführungsleitung der Kanüle angeordnet. Dies ist aus mehreren Gründen vorteilhaft. Zum Einen verhindert ein solches Sperrventil einen Rücktransport von Verschmutzungen und/oder Krankheitserregern, so dass die Hygiene verbessert wird.

Außerdem wird durch das Sperrventil verhindert, dass abrasive Partikel in rückwärts gelegene Bereiche der Kanüle oder auch des Handstücks gelangen und Funktionsstörungen verursachen. Dies gilt insbesondere bei einer Benutzung von wasserunlöslichen Partikeln, die die Mechanik des Handstücks beträchtlich schädigen können.

Eine einfache Konstruktion lässt sich dann erreichen, wenn die zweite Zuführungsleitung einen sich im vorderen Längsabschnitt von hinten nach vorne z.B. achsparallel oder schräg, erstreckenden Leitungsabschnitt aufweist, der sich zur Auslassdüse hin erstreckt. Bei Anordnung dieses Leitungsabschnitts im der Auslassdüse zugewandten Seitenbereich der Kanüle ergibt sich eine vorteilhafte Konstruktion, das der Leitungsabschnitt sich direkt zur Auslassdüse hin erstrecken kann und deshalb eine einfache Konstruktion vorgegeben ist, die trotz des radialen Versatzes eine kleine Konstruktion ermöglicht. Hierzu tragen auch noch weitere Ausgestaltungsmerkmale der erfindungsgemäßen Kanüle bei.

In weiteren Unteransprüchen sind Merkmale enthalten, die ebenfalls zu einfachen und kostengünstig herstellbaren Bauweisen kleiner Baugröße führen, eine gute Funktion gewährleisten und eine einfache und schnelle Montage bzw. Demontage von lösbaren oder auch austauschbaren Bauteilen ermöglichen.

Nachfolgend werden vorteilhafte Ausgestaltungen der Erfindung anhand von bevorzugten Ausführungsbeispielen und Zeichnungen näher erläutert. Es zeigen:
- Fig. 1: eine Kanüle im axialen Schnitt welche kein Gegenstand der beanspruchten Erfindung ist.
- Fig. 2: die Kanüle nach Fig. 1 in abgewandelter Ausgestaltung;
- Fig. 3: eine erfindungsgemäße Kanüle im Längsschnitt;
- Fig. 4: die Kanüle in abgewandelter Ausgestaltung im Längsschnitt;
- Fig. 5: ein Handinstrument mit einer Kanüle nach Fig. 1 im axialen Schnitt;
- Fig. 6: ein Handstück für eine Kanüle nach Fig. 3 oder 4 im axialen Schnitt;
- Fig. 7: die in Fig. 6 mit dem Pfeil X gekennzeichnete Einzelheit in abgewandelter und vergrößerter Darstellung.
- Fig.8: die in Fig. 6 mit dem Pfeil Y gekennzeichnete Einzelheit in abgewandelter Ausgestaltung.

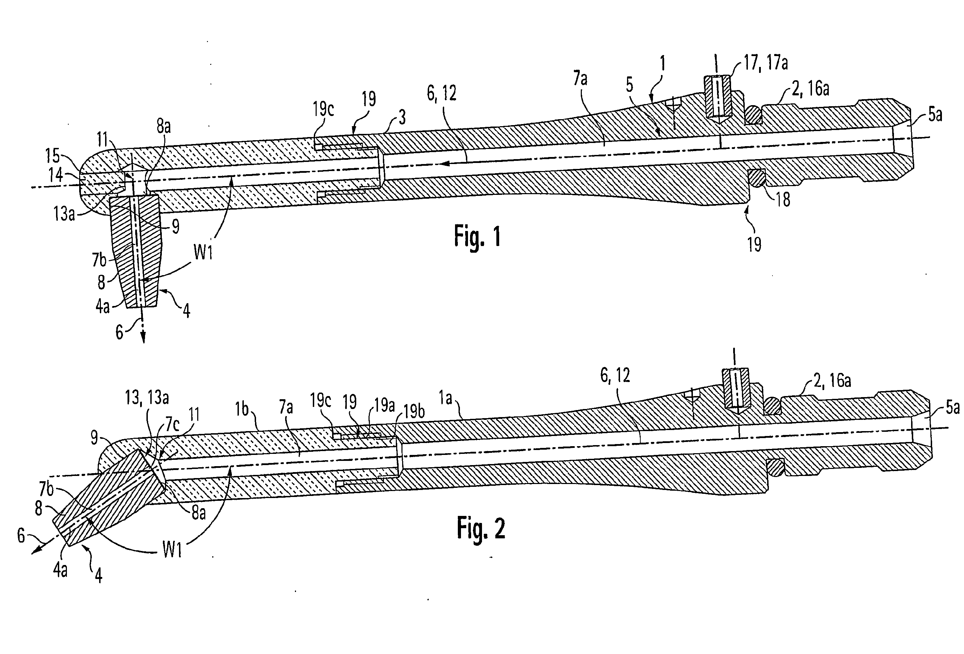

Die Hauptteile der in Fig. 1 in ihrer Gesamtheit mit 1 bezeichneten Kanüle sind ein Kanülenfuß 2, der mit dem vorderen Ende eines noch zu beschreibenden Handstücks unlösbar oder lösbar verbunden ist, ein sich vom Kanülenfuß nach vorne und im wesentlichen gerade erstreckender Kanülenschaft 3, eine Auslassdüse 4, die im vorderen Endbereich des Kanülenschafts 3 angeordnet und seitwärts gerichtet ist, und eine Zuführungsleitung 5 für ein Strömungsmittel 6, wobei die Zuführungsleitung 5 den Kanülenfuß 2 und den Kanalschaft 3, die koaxial zu einander angeordnet sind, mit einem ersten Kanalabschnitt 7a durchsetzt, von dessen vorderem Endbereich sich ein zweiter Kanalabschnitt 7b zur Auslassdüse 4 erstreckt. Die Kanalabschnitte 7a, 7b schließen einen nach hinten offenen Winkel W1 ein, der spitz oder etwa rechtwinklig, wie es Fig. 1 zeigt, oder stumpf sein kann, wie es Fig. 2 zeigt. Die Auslassdüse 4 befindet sich am freien Ende einer Düsenhülse 8, die fest in ein sich koaxial zur Düsenachse 4a erstreckendes Aufnahmeloch 9 im Kanülenschaft 3 eingesetzt ist, z.B. darin verklebt oder verlötet oder verschweißt ist, wobei das Aufnahmeloch 9 sich bis zum ersten Kanalabschnitt 7a erstrecken kann. Beim Ausführungsbeispiel ist die Düsenhülse 8 an ihrem hinteren Stirnende mit der Innenwand des ersten Kanalabschnitts 7a abschließend eingesetzt, sodass ihre hintere Stirnfläche 8a mit der zylindrischen Krümmung des ersten Kanalabschnitts 7a abschließt. Die Querschnittsgröße der Düsenhülse 8 ist zu ihrem freien Ende hin verjüngt, insbesondere kegelförmig.

Beim Ausführungsbeispiel nach Fig. 1 bis 3 besteht das Strömungsmittel aus einem Luftstrom (Druckluft), in den Partikel aus wasserunlöslichem Material, z.B. Korundkörner, oder wasserlöslichem eingemischt sind.

Im Bereich des Scheitels 11 des Winkels W1 ist dem ersten Kanalabschnitt 7a in der sich von hinten nach vorne erstreckenden Strömungsrichtung gemäß Pfeil 12 gegenüberliegend eine Prallwand 13 mit einer Prallfläche 13a angeordnet, deren Material verschleißfester ist, als das Material des Kanülenschaftes 3, der mit dem Kanülenfuß 2 vorzugsweise einteilig ausgebildet ist. Beim Ausführungsbeispiel wird die Prallwand 13 durch ein Einsatzteil 14 gebildet, das in ein Aufnahmeloch 15 fest eingesetzt ist, vorzugsweise von außen eingeschoben und fixiert ist, z.B. durch Presssitz, Kleben, Schweißen oder Löten. Wie Fig. 1 zeigt, kann die Prallwand 13 mit dem vorderseitigen Wandabschnitt des zweiten Kanalabschnitts 7b abschließen oder von diesem Wandabschnitt einen geringen nach vorne gerichteten Abstand aufweisen. Als Material für die Prallwand 13 oder das Einsatzteil 14 eignen sich Hartmetall oder ein verschleißfester Kunststoff gut.

Eine lösbare Verbindung für den Kanülenfuß 2 ist vorzugsweise durch eine Steckfassung 16 mit einem Steckzapfen 16a und einer diesen mit geringem Bewegungsspiel aufnehmenden Steckausnehmung 16b gebildet. Der Steckfassung 16 ist eine axial und in Umfangsrichtung wirksame Arretiervorrichtung 17 zugeordnet. Bei den Ausführungsbeispielen sind die Steckfassung 16 und die Arretiervorrichtung 17 jeweils durch einen sogenannten Bajonettverschluss gebildet, wobei der Steckzapfen 16a den Kanülenfuß 2 bildet und vom Kanülenschaft 3 nach hinten ragt und die Steckausnehmung 16b im Handstück angeordnet ist und nach vorne ausmündet. Die Arretiervorrichtung 17 weist einen vom Kanülenschaft 3 radial abstehenden Stift 17a auf, der fest in ein zugehöriges Aufnahmeloch 17b im Kanülenschaft eingesetzt ist und dem am vorderen Ende des Handstücks eine winkelförmige Ausnehmung zugeordnet ist, in die der Stift 17a durch Einstecken und Drehen einführbar und vorzugsweise verrastbar ist.

Im Funktionsbetrieb der Kanüle 1 bzw. des die Kanüle 1 aufweisenden Handinstruments strömt das Luft und abrasive Partikel enthaltende Strömungsmittel 6 von hinten nach vorne durch den ersten Kanalabschnitt 7a, wobei es auf die Prallwand 13 trifft und in den zweiten Kanalabschnitt 7b umgelenkt wird.

Die Querschnittsgröße des zweiten Kanalabschnitts 7b ist kleiner als die des ersten Kanalabschnitts 7a, wobei sie etwa halb so groß bemessen sein kann. Die kleine Innenquerschnittsgröße der Düsenhülse 8 führt zu einem konzentrierten Strahl des Strömungsmittels 6. Ein im Querschnitt größerer erster Kanalabschnitt 7a vergrößert die Unempfindlichkeit gegen eine durch die abrasiven Partikel hervorgerufene Verstopfung.

Die Prallwand 13 bzw. das Einsatzteil 14 und die Düsenhülse 8 bestehen vorzugsweise aus Hartmetall, wobei der Kanülenschaft 3 aus korrosionsfestem Metall bestehen kann, z.B. aus legiertem Stahl. Aufgrund der Verschleißfestigkeit der Prallwand 13 und der Düsenhülse 8 ist die Kanüle 1 verschleißfest. Dies bedeutet, dass Verschleiß im Bereich der Prallfläche 13a und der Düsenhülse 8 vorhanden sein kann, jedoch so gering ist, dass er wie im übrigen Bereich des Kanülenschaftes 3 dessen Innenmantelfläche den Partikeln wenig Angriffsfläche bietet, vernachlässigbar gering ist.

Die Steckfassung 16 kann durch einen Dichtring 18 abgedichtet sein, der beim Ausführungsbeispiel durch einen O-Ring gebildet ist, der in einer Ringnut in der Außenmantelfläche des Steckzapfens 16a oder in der Innenmantelfläche der Steckausnehmung 16b sitzt.

Das Ausführungsbeispiel nach Fig. 2, bei dem gleiche oder vergleichbare Teile mit gleichen Bezugszeichen versehen sind, unterscheidet sich vom vorbeschriebenen Ausführungsbeispiel in zweierlei Hinsicht. Zum einen ist die Auslassdüse 4 nicht rechtwinklig seitwärts, sondern schräg nach vorne gerichtet, wobei der von den Kanalabschnitten 7a, 7b eingeschlossene Winkel W1 stumpf ist und z.B. etwa 100° bis 160°, insbesondere etwa 110° oder 150°, betragen kann.

Zum anderen ist die Prallwand 13 oder das Einsatzteil 14 durch einen sich vor den ersten Kanalabschnitt 7a erstreckenden Abschnitt der Düsenhülse 8 gebildet. Dies wird beim Ausführungsbeispiel nach Fig. 2 dadurch erreicht, dass das Aufnahmeloch 9 bis in den Bereich der der Auslassdüse 4 abgewandten Seite des ersten Kanalabschnitts 7a verlängert ist, vorzugsweise so weit, dass die Einlassöffnung 7c des zweiten Kanalabschnitts 7b sich im Bereich der Mittelachse des ersten Kanalabschnitts 7a befindet. Bei dieser Ausgestaltung prallt das Strömungsmittel 6 gegen das hintere Ende der Düsenhülse 8. Da auch diese aus verschleißfestem Material besteht, insbesondere aus Hartmetall, ist auch hier der Kanülenschaft 3 im Bereich des Scheitels 11 vor einem schädlichen Verschleiß geschützt.

Es ist vorteilhaft, die Kanüle 1 im Bereich zwischen ihrem Kanülenfuß 2 und dem Scheitel 11 quer in einen hinteren und einen vorderen Kanülenabschnitt 1a, 1b zu teilen und durch eine Verbindungsvorrichtung 19 miteinander zu verbinden. Diese Verbindung kann lösbar oder unlösbar sein. Diese Ausgestaltung hat den Vorteil, dass unterschiedliche Kanülen 1 dadurch verwirklicht werden können, dass nur die vorderen oder hinteren Kanülenabschnitte unterschiedlich ausgebildet sind, während der jeweils andere Kanülenabschnitt gleich ausgebildet ist und deshalb jeweils ein Kanülenabschnitt gleicher Bauweise für unterschiedliche Kanülen 1 eingesetzt werden kann, wie es beim Ausführungsbeispiel gemäß Fig. 1 und 2 der Fall ist, bei denen die vorderen Kanülenabschnitte 1b unterschiedlich sind und die unteren Kanülenabschnitte 1a gleich sind. Hierdurch wird die Herstellung wesentlich vereinfacht, und es lassen sich auch die Herstellungskosten wesentlich reduzieren.

Die Verbindungsvorrichtung 19 kann durch eine Steckverbindung mit einem Steckzapfen und eine ihn aufnehmende Steckausnehmung gebildet sein, wobei der Steckzapfen 19b z.B. durch Einstecken oder Einpressen oder Schrauben in die Steckausnehmung 19a unlösbar oder lösbar verbunden sein kann. Es ist auch möglich, den vorderen und hinteren Kanülenabschnitt 1a, 1b durch Kleben, Löten oder Schweißen miteinander zu verbinden, wobei sie die vorbeschriebene oder eine andere Ausgestaltungsform aufweisen können.

Beim Ausführungsbeispiel erstreckt sich der Steckzapfen 19b vom hinteren Ende des vorderen Kanülenabschnitts 1b nach hinten, und er sitzt in der am vorderen Ende des hinteren Kanülenabschnitts 1a ausmündenden Steckausnehmung 19a. Die Kanülenabschnitte 1a, 1b liegen an einer vorzugsweise radialen Teilungsfuge 19c aneinander an, die durch die die Steckausnehmung 19a umgebende Ringstirnfläche und die Stufenfläche am Steckzapfenfuß gebildet sind.

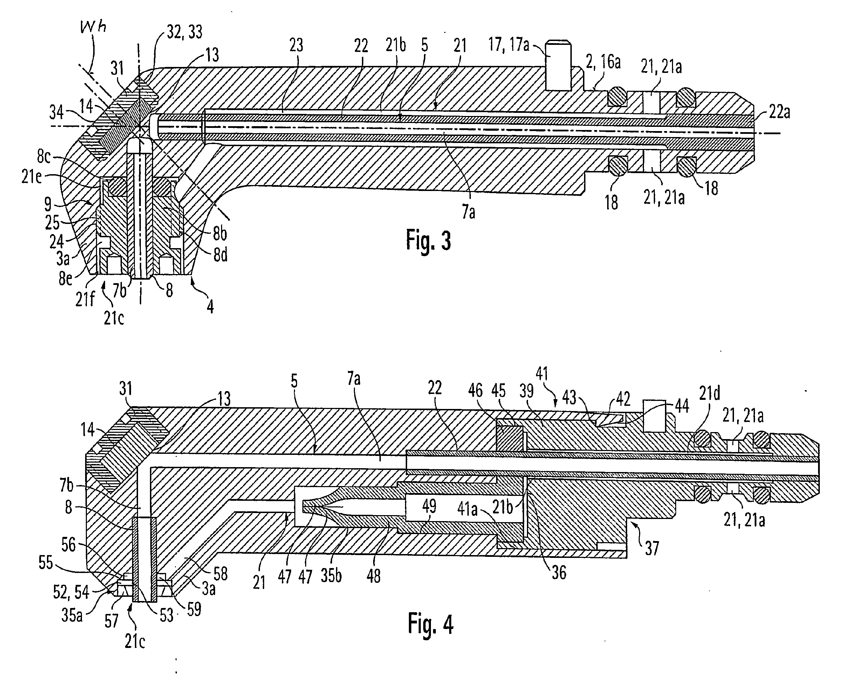

Beim Ausführungsbeispiel nach Fig. 3, bei dem gleiche oder vergleichbare Teile mit gleichen Bezugszeichen versehen sind, weist die Kanüle 1 im Bereich ihres Kanülenfußes 2 eine zweite Zuführungsleitung 21 für die Zuführung von Wasser auf, die sich von einer oder zwei Einlassöffnungen 21a im mittleren Bereich der Mantelfläche des Steckzapfens 16a zunächst radial nach innen und dann parallel zum ersten axialen Kanalabschnitt 7a nach vorne erstreckt und sich dann zum Umfangsbereich der Auslassdüse 4 erstreckt, in deren Bereich die zweite Zuführungsleitung 21 als schlitzartige Ringöffnung 21c z.B. aus einem seitlichen Ansatz 3a des Kanülenschaftes 3 austritt. Vorzugsweise ist der axiale Kanalabschnitt 21b als ein den axialen Kanalabschnitt 7a umgebender Ringkanal ausgebildet, der beim Ausführungsbeispiel zwischen einer den axialen Kanalabschnitt 7a auskleidenden Kanalhülse 22 und einem diese umgebenden Ringhohlraum gebildet ist. Beim Ausführungsbeispiel ist dieser Ringhohlraum durch eine zylindrische Querschnittsverjüngung der Kanalhülse 22 gebildet, wobei die Kanalhülse 22 mit ihrem hinteren verdickten Endabschnitt 22a in einer Bohrung, hier einer Stufenbohrung 23 fest eingesetzt ist, die in ihrem vorderen Endbereich in einem axialen Abstand vom Scheitel 11 auf die Querschnittsabmessung der vorzugsweise hohlzylindrischen Kanalhülse 22 verjüngt ist, sodass die Kanalhülse 22 in ihrem vorderen und in ihrem hinteren Endbereich fest in dem Stufenloch 23 sitzt und dazwischen von dem Ringspalt 21d umgeben ist.

Beim Ausführungsbeispiel nach Fig. 3 ist die Düsenhülse 8 vom Kanülenschaft 3 nicht seitlich abstehend, sondern in dem seitlich abstehenden Ansatz 3a versenkt angeordnet und von der Ringdüse 21c umgeben. Das sich im Ansatz 3a befindliche Aufnahmeloch 9 ist eine Stufenbohrung mit einem Innengewinde 24 in seinem mittleren Längsbereich, wobei der äußere Längsabschnitt 9a der Stufenbohrung gleich oder etwas größer ist als der Außendurchmesser des Innengewindes 24, und der innen vom Innengewinde 24 angeordnete Längsabschnitt 9b gleich oder kleiner bemessen ist, als das Innengewinde 24. Die Düsenhülse 8 weist einteilig oder zweiteilig einen verdickten Düsenkörper 8b mit einer koaxialen Bohrung auf, in der die Düsenhülse 8 sitzt. Der Düsenkörper 8b ist stufenzylindrisch ausgebildet mit einem mittleren, in das Innengewinde 24 eingeschraubten Außengewinde 25, einem von diesem innen angeordneten und verjüngten Körperabschnitt und einem äußeren Körperabschnitt, die jeweils einen Ringabstand 21e, 21f zum Aufnahmeloch 9 aufweisen. Der Düsenkörper 8b ist bezüglich der Stufenbohrung 9 und der Hülsendüse 8 durch einen Dichtring 8c abgedichtet, der in einer Ausnehmung in der hinteren Stirnfläche des Düsenkörpers 8b sitzt. Im Bereich des Außengewindes 25 erstreckt sich ein achsparalleler Kanal 8d zu einer Ringnut 8e im Düsenkörper 8b, von der sich der Ringabstand 21f axial erstreckt. Die Hülsen 8, 22 bilden Schutzwände 13b, an denen die abrasiven Partikel entlangstreichen, im Gegensatz zur Prallfläche 13a.

Ein anderer Unterschied besteht darin, dass die Prallfläche 13a der Prallwand sich etwa rechtwinklig zur Winkelhalbierenden Wh des Winkels W1 vorzugsweise so erstreckt, dass für den Funktionsbetrieb an der Prallfläche 13a abprallende Partikel der Einfallswinkel im Wesentlichen gleich dem Ausfallswinkel ist.

Ein weiterer Unterschied kann darin bestehen, dass das Einsatzteil 14 an einem lösbaren Einsatzteilträger 31 gehalten ist, der lösbar mit der Kanüle 1 verbunden ist, z.B. durch eine Schraubverbindung 32. Der Einsatzteilträger 31 kann ein Außengewinde aufweisen, mit dem er in eine Gewindebohrung 33 eingeschraubt ist. Beim Ausführungsbeispiel weisen der Einsatzteilträger 31 und das Einsatzteil 14 jeweils die Form einer Scheibe auf, wobei der Einsatzteilträger 31 mit seiner äußeren Stirnfläche mit der Umfangsfläche der Kanüle 1 in etwa abschließt, z.B. als ebene Stirnfläche, die in etwa mit einer Abschrägung 34 abschließt. Das Einsatzteil 14 kann am flachen Grund der Bohrung 33 anliegen und in einer Ausnehmung im Träger 31 sitzen.

Das Ausführungsbeispiel von Fig. 4, bei dem gleiche oder vergleichbare Teile mit gleichen Bezugszeichen versehen sind, ist ebenfalls dafür eingerichtet, ein aus Luft, abrasiven Partikeln und Wasser bestehendes Strömungsmittel 6 zuzuführen, und es weist im Vergleich mit der Ausgestaltung nach Fig. 3 mehrere Unterschiede auf. Ein erster Unterschied besteht darin, dass in der zweiten Zuführungsleitung 21 wenigstens ein Ventil 35 angeordnet ist, das eine Rückströmung sperrt und somit ein sogenanntes Rückschlagventil bildet. Dabei können in der zweiten Zuführungsleitung 21 im Bereich der Kanüle 1 zwei solcher Rückstrom-Sperrventile 35a, 35b vorgesehen sein, von denen das erste Rückstrom-Sperrventil 35a z.B. im Bereich der Auslassdüse 4 angeordnet ist und ein hinteres Rückstrom-Sperrventil 35b im mittleren Bereich der Kanüle 1 angeordnet ist, insbesondere in einem sich parallel zur ersten Zuführungsleitung 5 erstreckenden Abschnitt 21g der zweiten Zuführungsleitung 21. Die Querverbindung zum parallelen Abschnitt 21g der zweiten Zuführungsleitung 21 ist durch einen stromauf von einem Rückstrom-Sperrventil oder vom hinteren Rückstrom-Sperrventil 35b angeordneten Querkanal 36 gebildet. Im hinteren Endbereich und (im Bereich des ersten Kanalabschnitts 7a) entspricht das Ausführungsbeispiel nach Fig. 4 mit der Kanalhülse 22 grundsätzlich im Wesentlichen dem Ausführungsbeispiel nach Fig. 3, jedoch kann die Kanalhülse 22 kürzer bemessen sein, und stromauf vom Querkanal 36 enden.

Der parallele Zuführungsleitungsabschnitt 2 1 g ist vorzugsweise von hinten zugänglich, sodass das zugehörige Rückstrom-Sperrventil 35b von hinten einführbar oder austauschbar ist. Hierzu kann der Parallelabschnitt 21 der zweiten Zuführungsleitung 21 von hinten zugänglich und durch ein Verschlussteil verschließbar sein. Beim Ausführungsbeispiel ist das mit 37 bezeichnete Verschlussteil von hinten lösbar mit der Kanüle 1 verbunden. Vorzugsweise ist eine Schnellverbindungsvorrichtung 41, z.B. eine Verrastungsvorrichtung oder ein Bajonettverschluss, vorgesehen. Das Verschlussteil 37 kann ein Steckzapfen 39 sein, der von hinten in eine rückseitig offene Steckausnehmung 41 a in der Kanüle 1 einsteckbar und sicherbar ist, z.B. durch eine Drehbewegung bei einem Bajonettverschluss oder durch Verrasten jeweils am Ende der Einsteckbewegung. Eine Verrastungsvorrichtung kann z.B. durch eine oder mehrere auf dem Umfang verteilte Verrastungsnasen 42 gebildet sein, die radial ausfederbar an der Umfangswand der Steckausnehmung 41a angeordnet sind, und jeweils eine Verrastungskante 43 am Steckzapfen 39 hintergreifen, z.B. eine rückseitig verjüngte Stufenfläche am Steckzapfen 39. Die wenigstens eine Verrastungsnase 42 kann eine schräge oder gerundete Einführungsfläche 44 aufweisen, die bei Einschieben des Steckzapfens 39 in seine Steckfassung selbsttätig ein Ausfedern der Verrastungsnase 42 bewirkt, wobei letztere am Ende der Einsteckbewegung selbsttätig einrastet.

Beim Ausführungsbeispiel ist das Verschlussteil 37 Träger des Kanülenfußes 2, wobei die Arretiervorrichtung 17, z.B. mit dem Stift 17a, an dem gemeinsamen, vom Verschlussteil 37 und Kanülenfuß 2 gebildeten Bauteil 40 angeordnet sein kann.

Beim Ausführungsbeispiel weist das Verschlussteil 37 an seinem vorderen Ende eine Ausnehmung 45 auf, in der das hintere Ende des Rückstrom-Sperrventils 35a sitzt, vorzugsweise mit einem Flansch 46, der sich exzentrisch bis in den Bereich der ersten Zuführungsleitung 5 erstreckt und ein Durchgangsloch für die Kanalhülse 22 aufweist, die den Flansch 46 vorzugsweise nach vorne überragt. Der Querkanal 36 kann durch eine Vertiefung des Grundes der Ausnehmung 45 gebildet sein.

Bei diesem Ausführungsbeispiel ist somit der die Kanalhülse 22 umgebende Ringspalt 21d im Bauteil 40 angeordnet.

Das Sperrventil 35a ist vorzugsweise ein Lippenventil mit wenigstens einer oder zwei sich nach vorne erstreckenden und im entspannten Zustand im Wesentlichen geschlossenen Lippen 47, die sich von einem hülsenförmigen Basiskörper 48 erstrecken können, der ggf. eine nach vorne verjüngte Stufe aufweisen kann und in einer die zweite Zuführungsleitung 21 im Querschnitt erweiternden Bohrung 49 von hinten mit geringem Bewegungsspiel eingeschoben ist, wobei die Bohrung 49 sich bis vor die Lippen 47 erstreckt.

Das andere, vorzugsweise im Bereich der Auslassdüse 4 angeordnete Sperrventil 35b ist insbesondere ein Membranventil mit einer Membrane 52, die gegen ihre eigene Elastizität durch die Strömung des Wassers in ihre Offenstellung bewegbar ist und bei Fortfall der Strömung aufgrund ihrer Eigenelastizität selbsttätig in ihre Schließstellung zurückfedert.

Beim Ausführungsbeispiel ist die Membran 52 eine Ringscheibe aus elastisch biegbarem Material, z.B. Gummi oder Kunststoff, die mit ihrem Innenrand auf der vorzugsweise als dünnes Röhrchen ausgebildeten Düsenhülse 8 sitzt und an ihrem Außenrand fixiert ist, z.B. zwischen dem Grund oder einer Schulterfläche 55 eines die Düsenhülse 8 umgebenden Loches 56, in das ein den Außenrand 54 gegen die Schulterfläche 55 klemmender Klemmrings 57 fest eingesetzt, z.B. eingeschraubt ist. Die zweite Zuführungsleitung 21 für Wasser mündet z.B. durch einen sich nach vorne divergent oder schräg erstreckenden Kanalabschnitt 58 stromab der Membran 52, z.B. in einen durch die Schulterfläche 55 in Form einer Stufenfläche gebildeten Grundbereich 59 des Loches 56, der die Düsenhülse 8 ringförmig umgibt.

Wenn das Wasser die Sperrventile 35a, 35b durchströmt, werden beide Ventile durch den Strömungsdruck selbsttätig geöffnet, wobei beim Sperrventil 35a die Lippen 47 gespreizt werden und beim Sperrventil 35b der Innenrand 53 der Membran 52 in Strömungsrichtung elastisch ausgebogen wird, dabei von der Außenmantelfläche der Düsenhülse 8 abhebt und dadurch einen Ringspalt freigibt, durch den das Wasser nach vorne ausströmen und eine auf die Behandlungsstelle gerichtete Wasserhülse bilden kann. Insbesondere das Sperrventil 35b mit einer Membrane 52 führt aufgrund der axialen Rückbewegung zu einem Rücksaugeffekt an der Ringdüse 21c, wodurch eine Tropfenbildung vermieden wird.

Wie bereits bei den Ausführungsbeispielen nach Fig. 1 und 2 können auch bei den Ausführungsbeispielen nach Fig. 3 und 4 jeweils der tragende Basiskörper der Kanüle 1 aus korrosionsfestem Material, z.B. legiertem Stahl bestehen.

Bei allen vorbeschriebenen Ausführungsbeispielen ist es aber auch aus mehreren Gründen vorteilhaft, wenigstens den tragenden Körper des vorderen Abschnitts 1b der Kanüle 1 oder den tragenden Körper der Kanüle 1 insgesamt aus Keramik zu bilden. Dieses Material ist wärmeisolierend und deshalb besonders gut geeignet, bei Kontakt mit dem menschlichen Körper durch Temperaturunterschiede hervorgerufene und als unangenehm fühlbare Kontakte zwischen dem zu behandelnden Körper und der Kanüle 1 zu vermeiden. Da Keramik sich in eine Form gießen und/oder pressen lässt, ist hierdurch als Gieß- oder Pressteil auch eine einfache und kostengünstige Herstellung möglich.

Insbesondere dann, wenn die Kanüle 1 der Zuführung von wasserunlöslichen Partikeln dienen soll, ist es vorteilhaft, den Keramikkörper der Kanüle 1 im Bereich des ersten und zweiten Kanalabschnitts 7a, 7b mit Schutzwänden 13b, insbesondere mit Hülsen 22, 8 auszukleiden, wie es in Fig. 3 beispielhaft dargestellt ist, wobei die abrasiven Partikel durch die Hülsen 22, 8 strömen und an der Prallwand 13 umgelenkt werden. Die Kanalhülse 22, die Prallwand 13 und die Düsenhülse 8 können aus hinreichend verschleißfestem Material bestehen, z.B. Hartmetall. Der Einsatzteilträger 31 und der Düsenkörper 8d können aus korrosionsfestem Stahl bestehen.

Zum Ein- und Ausschrauben des Einsatzteilträgers 31 und des Düsenkörpers 8b weisen diese ein von außen zugängliches Drehangriffselement auf.

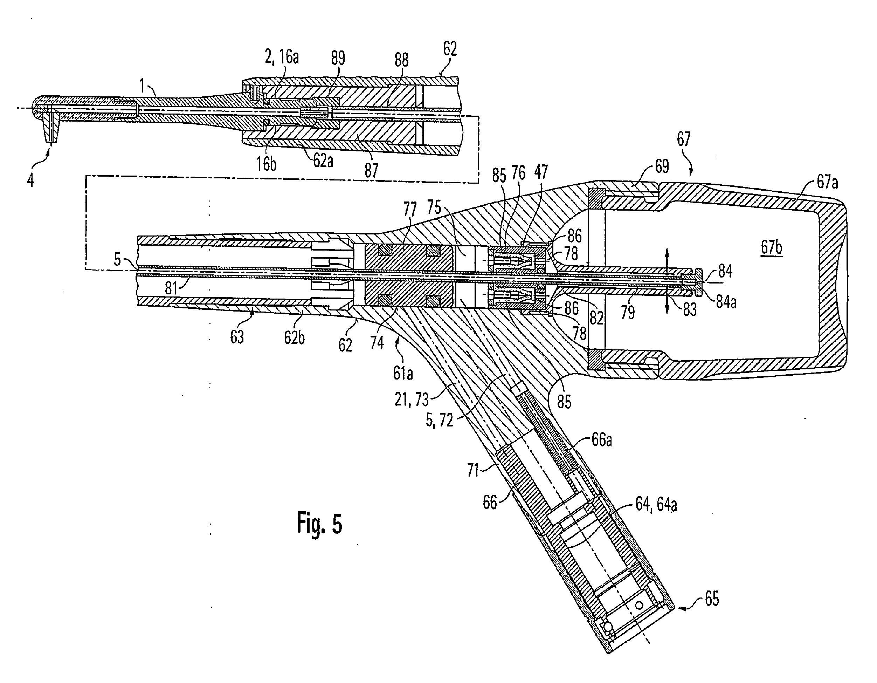

In Fig. 5 ist beispielhaft ein Handstück 61a dargestellt, das mit einer Kanüle 1 gemäß Fig. 1 und 2 bestückbar ist und der Zuführung eines Strömungsmittels 6 mit in Wasser löslichen Partikeln dienen kann. Ein solches Handstück 61a ist weitgehend in der EP 0 834 291 B1 beschrieben. Auf diese Offenbarung wird im vollen Umfang Bezug genommen, so dass sie Teil dieser Beschreibung ist und die folgende Beschreibung wie folgt reduziert werden kann.

Die Hauptteile des Handstücks 61 sind ein stabförmiger Handstückkörper 62, der an seinem vorderen Ende ein zur Kanüle 1 passendes Verbindungselement aufweist, hier eine zur Steckfassung 16 passende Steckausnehmung 16b. Der Handstückkörper 62 besteht aus einem vorderen Griffteil 62a und einen hinteren Schaft 62b, die durch ein Drehlager 63 um ihre Mittelachsen frei drehbar aneinander gelagert sind. Der hintere Schaft 62b weist ein Kupplungselement 64 einer Dreh/Steck-Kupplung 65 auf, durch die das Handstück 61 handhabungsfreundlich und schnell mit einer nicht dargestellten flexiblen Versorgungsleitung lösbar verbindbar ist, durch die sich die erste Zuführungsleitung 5 für Luft und die zweite Zuführungsleitung 21 für Wasser erstrecken, und in dem das Kupplungselement 64 tragenden Bauteil des Schaftes 62b fortsetzen und zwar vorzugsweise durch ein Einsatzteil 66 erstrecken, das ein herstellerspezifisches Kupplungselement 64 aufweist und austauschbar ist, sodass das Handstück 1 an herstellerspezifische Verbindungsausgestaltungen anpassbar ist. Beim Ausführungsbeispiel nach Fig. 5 kann die Zuführungsleitung 21 für Wasser entfallen. Sie ist aus Gründen gleich ausgebildeter Schaftteile 62b in diesem jedoch vorhanden.

Am Schaft 62b ist auch ein Vorratsbehälter 67 für abrasive Partikel angeordnet, der wahlweise zu öffnen und zu schließen ist, z.B. in Form eines an- und abschraubbaren Vorratstopfes 67a mit einem an seinem freien Rand angeordneten Gewinde, insbesondere Außengewinde 68, mit dem er in ein Innengewinde eines Gewindestutzens 69 abgedichtet einschraubbar ist, der vorzugsweise hinten am Schaft 62b insbesondere koaxial angeordnet ist. Beim Ausführungsbeispiel weist der Schaft 62b einen seitlichen Kupplungsansatz 71 auf, in dessen freiem Endbereich das Kupplungselement 64 ausgebildet ist, hier in Form einer zylindrischen oder stufenzylindrischen Steckausnehmung 64a.

Vom Kupplungselement 64 verlaufen die Zuführungsleitungen 5, 21 als Kanäle 72, 73 zu einem axialen Durchgangskanal 74 zur Aufnahme von das Strömungsmittel 6 leitenden Bauteilen, wobei der Durchgangskanal 74 vom hinter ihm angeordneten Vorratsraum 67b des Vorratsbehälters 67 her zugänglich ist und vorne zur Verbindung der Kanüle 1 zugänglich ist.

Ein sich im Einsatzteil 66 achsparallel erstreckender und am vorderen Ende aus dem Einsatzteil 66 ausmündender Zuführungsleitungsabschnitt ist durch eine Hülse 66a abgedichtet mit dem Handstückkörper 62 verbunden, wobei die Hülse 66a im Einatzteil 66 und im Handstückkörper 62 als Steckteil steckt.

Der Kanal 72 für Luft mündet in einem Freiraum 75 im Durchgangskanal 74 zwischen einem hinteren und einem vorderen Einsatzteil 76, 77. Vom Freiraum 75 erstreckt sich die Zuführungsleitung 5 in Form von einem oder mehreren außenmittigen Durchgangskanälen 78 im Einsatzteil 76 und dann weiter durch einen Ringkanal 79 zwischen einer koaxialen Kanalhülse 81 und einer Außenhülse 82 in den mittleren Bereich des Vorratsraumes 67b, in den der Ringkanal 79 mit einer oder mehreren Auslassöffnungen 83 vorzugsweise im mittleren mündet. Am hinteren Ende der Kanalhülse 81 ist eine Einlassöffnung 84 vorzugsweise in einer Schraubdüse 84a vorgesehen, durch die im Funktionsbetrieb das Luft/Partikel-Gemisch koaxial durch die Kanalhülse 81 und durch den Handstückkörper 62 nach vorne strömt. In dem oder den Durchgangskanälen 78 ist bzw. sind jeweils ein Rückström-Sperrventil 85 angeordnet, das ein Rückströmen insbesondere von abrasiven Partikeln verhindert. Hierdurch werden Verschmutzungen und Störungen vermieden, die die Partikel stromauf vom Vorratsraum 67b, insbesondere im Bereich des Kupplungselements 64, verursachen können. Vorzugsweise ist wenigstens ein Lippenventil mit einer oder zwei Lippen 47 in den Durchgangskanal 78 eingesetzt und fixiert, sodass die wenigstens eine Dichtlippe 47 sich in einem Freiraum 86 bewegen kann, der durch eine Stufenbohrung gebildet ist, in die der Hülsenkörper des Sperrventils 85 sitzt. Die Lippen 47 sind nach hinten gerichtet und öffnen bei einer Strömung in den Vorratsraum 67b und schließen bei einer Rückströmung selbsttätig. Bei dieser Ausgestaltung ist das Einsatzteil 76 vom Vorratsraum 67b her zugänglich und somit montierbar und demontierbar, z.B. um Reinigungsmaßnahmen durchzuführen oder das oder die Sperrventile 85 auszutauschen. Beim Ausführungsbeispiel kann dies nach einem Lösen der Außenhülse 82 erfolgen, die ebenfalls vom Vorratsraum 67b bzw. von hinten einsetzbar und entnehmbar ist und der Fixierung des Einsatzteils 76 dienen kann, z.B. durch radiale Klemmwirkung, ober als Schraubteil.

Die Kanalhülse 81 erstreckt sich das Drehlager 63 frei durchsetzend bis in ein im vorderen Endbereich des Handstückkörpers 62 sitzendes Einsatzteil 87, in dem es in einer Lagerbohrung 88 drehbar gelagert ist und in den Bereich einer Ringdichtung 89 reicht, die im Grund der Steckausnehmung 16b sitzt und durch axialen Druck den Kanülenfuß 2, hier den Steckzapfen 16a, abdichtet. Das Einsatzteil 87 ist mit einer hinteren Stufe stufenzylindrisch ausgebildet und von hinten durch den Durchgangskanal 74 im Handstückkörper 62 oder im Griffteil 62a eingeschoben.

Der Zuführungskanal 73 ist durch das andere Einsatzteil 77 gesperrt, weil er bei diesem Ausführungsbeispiel des Handstücks 61a nicht erforderlich ist.

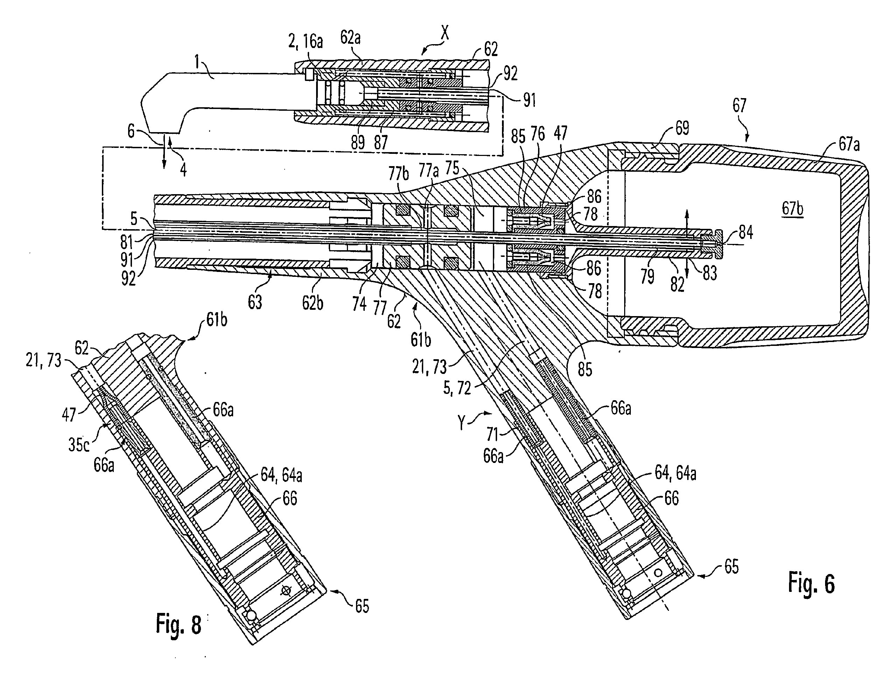

Das Ausführungsbeispiel nach Fig. 6 unterscheidet sich von dem nach Fig. 5 dadurch, dass die Wasser-Zuführungsleitung 21 sich durch das Einsatzteil 66 und den Durchgangskanal 74 zum Verbindungselement für die Kanüle 1 erstreckt und dort abgedichtet mit der koaxialen Einlassöffnung 5a verbunden ist. Hierzu kann ein die Kanalhülse 81 mit einem Ringspalt 91 umgebende Außenkanalhülse 92 vorgesehen sein, deren hinteres Ende im Einsatzteil 77 sitzt, wobei die Zuführungsleitung 21 sich im Einsatzteil 77 durch radiale und axiale Kanäle 77a, 77b zum Ringspalt 91 der Kanalaußenhülse 92 erstreckt. Im vorderen Endbereich des Handstückkörpers 62 ist der Ringspalt 92 durch radial und axiale Kanäle 87a, 87b im Einsatzteil 87 weiter nach vorne geführt, wo die so gebildete Zuführungsleitung 21 mit der oder den Einlassöffnungen 21a im Kanülenfuß 2 in Verbindung steht. Luft und Wasser können gleichzeitig zur Kanüle 1 zugeführt werden. Auch zur Verbindung des Einsatzteils 66 mit dem Handstückkörper 62 dient eine Hülse 66a, die in einem achsparallelen Zuführungsleitungsabschnitt im Einsatzteil 66 sitzt und in den Kanal 73 einfaßt und abgedichtet ist.

Insbesondere dann, wenn sich in einer Kanüle 1 für ein Handstück 61b kein Rückström-Wärmeventil 35a, 35d befindet, oder zusätzlich dazu kann in der Zuführungsleitung 21 für Wasser im Bereich des Handstücks 61b ein Rückström-Sperrventil 35c angeordnet sein, das beim Ausführungsbeispiel nach Fig. 8 stromab des Einsatzteils 66 im Handstückkörper 62 angeordnet ist, vorzugsweise direkt hinter dem Einsatzteil 66, so dass das Sperrventil 35c nach einer Entfernung des Einsatzteils 66 vom vorhandenen Kupplungsanschlußstutzen her zugänglich ist. Auch das Sperrventil 35c öffnet bei einer nach vorne gerichteten Strömung und sperrt bei einer nach hinten gerichteten Rückströmung jeweils selbsttätig. Bei diesem Sperrventil 35c kann es sich um ein Lippenventil mit einer oder zwei gegeneinander wirksamen und nach vom gerichteten Lippen 47 handeln. Auch die übrige Bauweise des Sperrventils 95c kann im wesentlichen der Ausgestaltung des Sperrventils 35b entsprechen. Der hülsenförmige Körper des Sperrventils 35c sitzt vorzugsweise sowohl in einem vorne ausmündenden Zuführungsleitungsabschnitt des Einsatzteils 66 als auch im sich daran anschließenden und ggf. erweiterten Kanal 73. Hierdurch kann das Sperrventil 35c die zugehörige Durchflußhülse 66a gemäß Fig. 6 ersetzen.

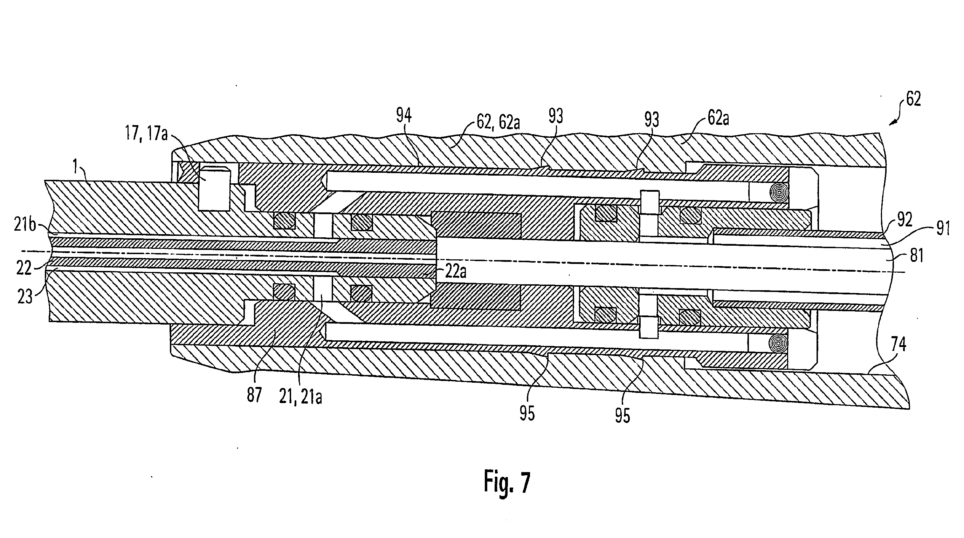

Fig. 7 zeigt eine vergrößerte Darstellung des Handstücks 61b nach Fig. 6 im Bereich eines abgewandelten Einsatzteils 87, das im Durchgangskanal 74 sitzt und vorzugsweise von hinten einschiebbar ist. Zur axialen Fixierung gegen ein axiales Verschieben kann das Einsatzteil 87 durch eine Presspassung im Handstückkörper 62 bzw. im Griffteil 62a fixiert sein. Da das Einsatzteil 87 beim Einsetzen der Kanüle 1 insbesondere nach hinten belastet wird, ist eine nach hinten gesperrte Verrastung für das Einsatzteil 87 besonders vorteilhaft. Beim Ausführungsbeispiel ist ein oder sind mehrere axial hintereinander angeordnete sägezahnförmige Ausnehmungen oder Ringnuten 93 in der Innenwand 94 des Durchgangskanals 74 vorgesehen. In diese Ausnehmungen oder Ringnuten 93 können Wandteile oder entsprechende radiale Vorsprünge 95 des Einsatzteils 87 einrasten. Insbesondere dann, wenn das Einsatzteil 87 aus einem geringfügig elastisch komprimierbarem Material besteht, z.B. Kunststoff. Die Sägezahnform der Ringnuten 93 ist nach hinten gerichtet. Deshalb lässt sich das Einsatzteil 87 mit den geringfügig geneigten Flanken der Vorsprünge 95 leicht einschieben, wobei die Zähne der Vorsprünge in die Ringnuten verrasten. Bei dieser Ausgestaltung ist sowohl die Kanülenverbindung als auch die Verbindung der Hülse 81 oder Hülsen 81, 92 an einem einzigem Bauteil, nämlich dem Einsatzbauteil 87, ausgebildet.

Im Funktionsbetrieb der Handstücke 61a, 61b, insbesondere des Handstücks 61b das mit wasserunlöslichen Partikeln betrieben wird; werden die Partikel im Vorratsbehälter 67 durch den Luftstrom verwirbelt, um eine gute und gleichmäßige Vermischung mit dem Luftstrom zu erreichen, und sie strömen dann durch die Hülsen 81, 22 bzw. Röhrchen zur Prallwand 13, an der sie umgelenkt werden und von der sie durch die Düsenhülse 8 strömen. Bei der Bewegung der Partikel unterliegen die Innenflächen der vorgenannten Teile einer Verschleißbeanspruchung. Um eine verhältnismäßig lange Lebensdauer zu gewährleisten, ist es vorteilhaft, diese Teile aus einem verschleißfesten Material, z.B. aus Hartmetall oder aus einem verschleißfesten Kunststoff herzustellen oder innen mit einem Hartmetall oder dergleichen oder einem verschleißfesten Kunststoff zu beschichten. Soweit der Vorratsbehälter 67 betroffen ist, gelten diese Maßnahmen für den Vorratsbehälter 67 insgesamt oder nur für das topfförmige Behälterteil 67a.

Es ist bei Versuchen ermittelt worden, dass sich Kunststoffe mit einem Härtegrad zwischen etwa 70 bis 100 Shore oder einem Härtegrad zwischen wenigstens etwa 150 N/mm², insbesondere etwa 180 bis 220 N/mm², nach der europäischen Norm EN ISO 2039-1, bei Gewährleistung einer verhältnismäßig langen Lebensdauer gut eignen. Es ist außerdem vorteilhaft, wenn der Elastizitätsmodul des jeweiligen Kunststoffs im Zugversuch (Gpa) 3,2 bis 4,5, insbesondere etwa 3,8 beträgt. Es ist im weiteren ermittelt worden, dass die Kunststoffe Polyetherehterketon (PEEK) oder Polyurethan (PUR) sich gut für die vorbeschriebene verschleißfeste Ausbildung bzw. Beschichtung eignen. Es ist im weiteren ermittelt worden, dass sich PEEK-Kunststoff, insbesondere mit einem Härtegrad von wenigstens etwa 150 N/mm², insbesondere etwa 180 bis 220 N/mm² nach der europäischen Norm EN ISO 2039-1, besonders gut für die verschleißfeste Ausbildung oder Beschichtung des Vorratsbehälters 67 und/oder wenigstens einer der Hülsen 81, 22, 8 eignet. Dies ist dadurch zu erklären, dass der PEEK-Kunststoff eine größere Härte aufweist.

Es ist im weiteren auch ermittelt worden, dass ein PUR-Kunststoff sich besonders gut für eine Prallwand 13 oder ein entsprechendes Einsatzteil 14 eignet. Es ist dadurch zu erklären, dass PUR-Kunststoff eine größere Elastizität aufweist, was sich auf die Prallwirkung im Sinne einer Verbesserung (Verschleißfestigkeit) günstig auswirkt.

Für die vorliegenden Zwecke eignen sich Polyetherehterketon (PEEK) und Polyurethan PUR-Gießharze sehr gut, insbesondere Elastomer-Gießharze für Heiß-Verguß nach dem "Vulkollan"-Prinzip, die Drei-Komponenten-Systeme sind. Sie bestehen aus langkettigen Adipinesterdiolen, die vor dem Guß durch Erhitzen unter Vakuum im Gießkessel völlig entgast und entwässert werden müssen, dem sehr reaktiven NDI (MP 120°C, s. Tafel 4.65, 3, S.470), das im Überschuss zugefügt langkettige, aber nicht stabile Zwischenprodukte bildet, und schließlich einem zuletzt zugefügten kleinen Anteil eines einfachen Glykols oder eines ähnlichen kettenverlängernden und - durch Reaktion 4 oder 5, Tafel 4.66, S. 472 - vernetzenden Mittels. Die Vernetzung beginnt unmittelbar beim Guss, die Produkte werden aber nach der Entformung bei 80-140°C für volles Aushärten nachgeheizt. Dieser Typ stramm gummielastischer Elastomere mit weitem Gebrauchstemperaturbereich (Tafel 4.68) ist extrem verschleißfest und beständig gegen Schmiermittel, viele Lösungsmittel und Bewitterung. Zellige Elastomere dieses Typs mit Dichten von 0,25-0,65 g/cm³ werden hergestellt unter Zugabe abgemessener Mengen von Wasser. Aufgrund ihrer zelligen Struktur sind sie kompressibel ohne Seitenverformung und zeigen ein sehr günstiges Dämpfungs- und Rückprallverhalten.

Außer diesen Typen gibt es auch Zweikomponenten-Warm-Gießharze mit stabilen Polyether-MDI-Prepolymeren. Diese sind im Vergleich zu oben erwähnten Systemen einfacher zu verarbeiten, mechanisch nicht ganz so gut, aber hydrolysebeständiger.

Der Kunststoff für den Vorratsbehälter bzw. das Behälterteil 67a ist vorzugsweise undurchsichtig, z.B. durchgefärbt, insbesondere schwarz durchgefärbt. Hierdurch sind Verschleißspuren an der Innenseite nicht sichtbar.

Die vorbeschriebenen Kunststoffe eignen sich somit wegen ihrer Verschleißfestigkeit auch als Prallwand 13 und Schutzwand 13b für die Zuführungsleitung 5. Deshalb können auch diese Kunststoffe als Material für die Düse 4a und/oder den Hülsenkanal 81 und/oder den Hülsenkanal 22 und/oder den Hülsenkanal 8 und/oder die Prallwand 13 verwendet werden, wobei eine lange Lebensdauer gewährleistet ist.

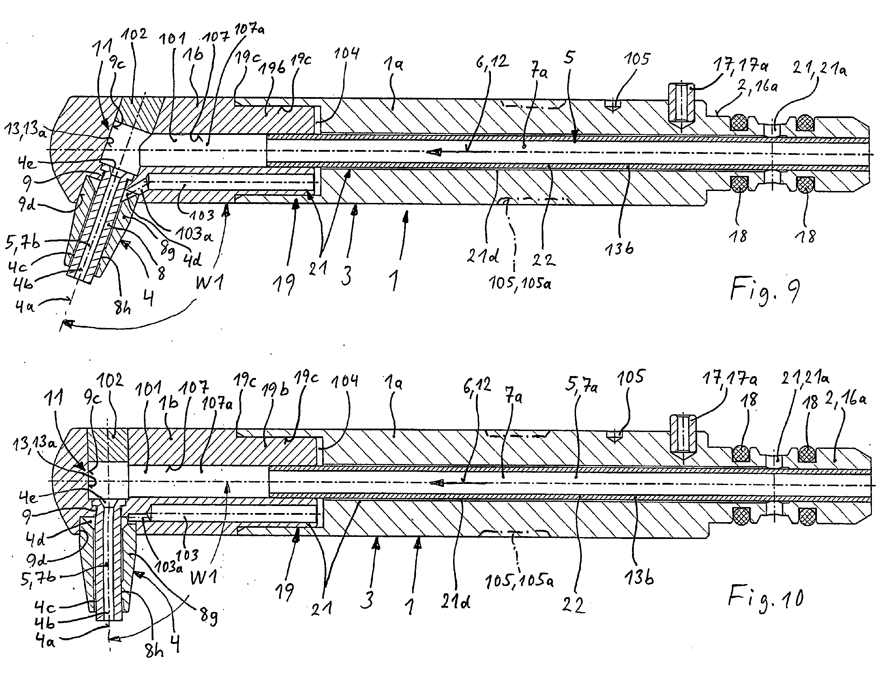

Die Ausführungsbeispiele nach Fig. 9 und 10, bei denen gleiche oder vergleichbare Teile mit gleichen Bezugszeigen versehen sind, enthalten Kombinationsmerkmale der vorbeschriebenen Ausführungsbeispiele, wobei sie insbesondere eine Kombination der Ausführungsbeispiele nach Fig. 1 und 2 mit einer zusätzlichen Zuführungsleitung 21 für eine Flüssigkeit, insbesondere Wasser, aufweisen. Der hintere Abschnitt der Kanüle 1 kann im wesentlichen im Ausführungsbeispiel nach Fig. 1 entsprechen, bei dem sich die zweite Zuführungsleitung 21 im Bereich des Steckzapfens 16a radial nach innen und dann als axialer Kanalabschnitt 21d in Form eines Ringkanals nach vorne erstreckt. Dabei erstreckt sich der axiale Kanalabschnitt 21d bis zur Teilungsfuge zwischen dem hinteren und dem vorderen Kanülenabschnitt 1a, 1b Die Kanalhülse 22 überragt die Teilungsfuge und erstreckt sich in den vorderen Kanülenabschnitt 1b hinein, wobei sie passend in einem Kanalabschnitt 101 des vorderen Kanülenabschnitt 1b sitzt und darin abgedichtet ist, z.B. durch die vorhandene Passung oder dadurch, dass die im Kanalabschnitt 101 eingeklebt ist. Dabei kann die Kanalhülse 22 mit Ausnahme ihres hinteren Endbereichs verjüngt sein, wie es Fig. 3 zeigt, oder die Kanalhülse 22 kann als hohlzylindrische Hülse ausgebildet sein, wobei der axiale Kanalabschnitt 21b durch eine sich vom Steckzapfen 16a bis zur Steckausnehmung 19a erstreckende Kanalerweitung gebildet sein, wie es Fig. 8 und 9 zeigen.

Wie bereits bei den Ausführungsbeispielen nach Fig. 3 und 4 weisen auch die Ausführungsbeispiele nach Fig. 8 und 9 eine gemeinsame Auslassdüse 4 für die erste und die zweite Zuführungsleitung 5, 21 auf, wobei ein zentraler Auslasskanal 4b für die durch die erste Zuführungsleitung 5 zugeführte und abrasive Partikel transportierende Luft vorgesehen ist, und ein den zentralen Auslasskanal 4b in einem Ringabstand umgebender Ringkanal 4c für die Flüssigkeit, insbesondere Wasser, vorgesehen ist.

Der zentrale Auslasskanal 4b befindet sich in der hohlzylindrischen Düsenhülse 8, die an ihrem inneren Ende vorzugsweise einen Flansch 8f aufweist, in dem sie in den ggf. in Anpassung an den Flansch 8f stufenförmig erweiterten Aufnahmeloch 9 sitzt und darin fixiert ist, z.B. durch Presssitz oder durch Kleben. Insbesondere dann, wenn die Düsenhülse 8 einen Flansch 8f aufweist, ist das Aufnahmeloch 9 als Durchgangsloch mit einem zur Auslassdüse 4 abgewandten Seite hin verlängerten Lochabschnitt 9c ausgebildet, der jenseits des Kanalabschnitts 101 durch einen fest und dicht eingesetzten Stopfen 102 verschlossen ist, dessen äußere Stirnfläche mit der vorzugsweise zylindrischen Mantelfläche der Kanüle 1 abschließt.

Der Ringkanal 4c ist durch eine die innere erste Düsenhülse 8 in einem Ringabstand umgebende zweite äußere Düsenhülse 8g gebildet, die in einer Locherweiterung 9d fest eingesetzt und abgedichtet ist. Die innere Düsenhülse 8 kann die äußere Düsenhülse 8g geringfügig überragen.

Die zweite Zuführungsleitung 21 erstreckt sich zum hinteren Ende des Ringkanals 4c bzw. der äußeren Düsenhülse 8g, wobei er radial mit dem Ringkanal 4c verbunden ist. Vorzugsweise ist im Bereich der Strömungsumlenkung zwischen dem sich im wesentlichen parallel zur Längsachse der Kanüle 1 erstreckenden Endabschnitt der zweiten Zuführungsleitung 21 und dem Ringkanal 4c ein sich schräg oder kegelförmig erstreckender Verbindungskanalabschnitt 4d vorgesehen, der beim Ausführungsbeispiel durch eine kegelförmige Einführungsfläche am hinteren bzw. inneren Ende der äußeren Düsenhülse 8g gebildet ist. Durch diese schräge bzw. konvergente Form des Verbindungsabschnitts 4d lässt sich eine störungsfreie und beruhigte Strömung erreichen. Zum Verbindungskanalabschnitt 4d erstreckt sich ein schräger oder etwa achsparalleler Zuführungskanalabschnitt 103, der von der hinteren Stirnseite des Steckzapfens 19b erstreckt und z.B. durch Bohren von hinten oder von vorne im vorderen Kanülenabschnitt 1b eingearbeitet werden kann bevor dieser mit dem hinteren Kanülenabschnitt 1a oder mit dem Düsenhülsen 8, 8g verbunden wird. An den achsparallelen Zuführungsleitungsabschnitt 103 kann sich ein schräger (Fig. 9) oder nach außen versetzter und/oder verjüngter Leitungsabschnitt 103a anschließen, der in den Verbindungsabschnitt 4d mündet.

Zur Verbindung des ringförmigen axialen Kanalabschnitts 21b mit dem exzentrischen Zuführungsleitungsabschnitt 103 ist ein sich im wesentlich radial erstreckender Verbindungskanal 104 vorgesehen, der vorzugsweise durch einen Ringfreiraum zwischen dem Grund der Steckausnehmung 19a und dem Steckzapfen 19b gebildet ist.

Zur Stabilisierung der inneren Düsenhülse 8 kann ein von ihrer Außenmantelfläche abstehender oder vorzugsweise von der Innenmantelfläche der äußeren Düsenhülse 8g abstehender Stütznocken 8h vorgesehen sein, der den Ringkanal 4c durchsetzt. Es können mehrere Stütznocken 8h, z.B. zwei oder drei Stück, auf dem Umfang verteilt angeordnet sein. Der oder die Stütznocken 8h weisen vorzugsweise einen axialen Abstand vom freien Rand der äußeren Düsenhülse 8g auf.

Um die Montage bzw. Demontage mit bzw. von dem Handstück zu erleichtern, ist es vorteilhaft, an der Kanüle 1 ein Drehangriffselement 105 für ein Drehwerkzeug auszubilden, so dass es leichter mit dem Handstück verbunden oder getrennt werden kann. Beim Ausführungsbeispiel ist das Drehangriffselement 105 durch eine sog. Schlüsselweite mit zwei Abflachungen bzw. sekantialen Schlüsselflächen 105a vorgesehen, die vorzugsweise im hinteren Fußbereich der Kanüle angeordnet und sich vorzugsweise parallel zur die Auslassdüse enthaltenden Längsmittelebene erstrecken. Das Drehangriffselement 105 kann auch durch ein radiales Sackloch 105b gebildet sein.

Die Ausführungsbeispiele nach Fig. 9 und 10 unterscheiden sich dadurch von einander, dass beim Ausführungsbeispiel nach Fig. 10 die Auslassdüse 4 bzw. die Kanäle 4b, 4c sich etwa rechtwinklig W1 zur Kanülenachse erstrecken, während sie beim Ausführungsbeispiel nach Fig. 9 mit der Kanülenachse einen stumpfen Winkel W1 einschließen, der z. B. 90° bis 120°, vorzugsweise etwa 110° beträgt.

Es ist insbesondere bei einer rechtwinklig abstehenden Auslassdüse 4 aber bei einer solchen mit einem stumpfen Winkel W1 abstehenden Auslassdüse 4 vorteilhaft, im Endbereich des axialen Kanalabschnitts 101 eine Kanalerweiterung 107 auszubilden, die beim Ausführungsbeispiel durch das Fehlen der Kanalhülse 22 im vorderen Endbereich des Kanalabschnitts 101 gebildet sein kann. Hierdurch wird ein vergrößerter Entspannungsraum 107a gebildet, der der Druckreduzierung des Druckes und der Strömungsgeschwindigkeit dient. Der Entspannungsraum 107a trägt somit zur Verringerung der abrasiven Wirksamkeit der Partikel bei, wodurch der Verschleiß an der dem Kanalabschnitt 101 gegenüberliegenden Endwand verringert wird.

Wenn im Funktionsbetrieb der Kanüle 1 arbeiten die abrasiven Partikel am Ende des Kanalabschnitts 101 eine Kavität durch Materialabtrag aus. Dies ist unerheblich, weil abrasive Partikel in der so gebildeten Kuhle verbleiben und nachkommende Partikel mit gleicher Härte umlenken, so dass der Materialabtrag am dem axialen Zuführungsleitungsabschnitt 1a gegenüberliegenden Wandbereich zum Stillstand kommt. Auf Grund der Kanalverengung zwischen dem Entspannungsraum 107a und dem zentralen Auslasskanal 4b kommt es in Letzterem wieder zu einer Vergrößerung der Strömungsgeschwindigkeit, was im Hinblick auf eine gewünschte Abtragsleistung am zu bestrahlenden Gegenstand, insbesondere am Zahn, erwünscht ist.

Hierbei bewirkt der zum Beispiel durch eine Anfasung 4e hinten z. B. kegelförmig konvergente Auslasskanal 4a, dass die abrasiven Partikel in einer laminaren Strömung durch den Auslasskanal 4a geleitet werden.

Die Querschnittsform der sich vorzugsweise gerade erstreckenden Kanüle 1 ist insbesondere rund, vorzugsweise zylindrisch.

Bei allen Ausführungsbeispielen ist es zur Verringerung des Verschleißes und zur Verlängerung der Lebensdauer vorteilhaft, die Teile, die Führungs-oder Kontaktwände für den Partikelstrom bilden, aus Keramik, Kunststoff, Edelstahl oder Hartmetall herzustellen oder mit einem dieser Materialien zu verkleiden. Hierbei kann es sich um folgende Teile handeln, nämlich den Vorratsbehälter 67, den Vorratstopf 67a, die Kanalhülse 81, die Hülse 22, den Körper der Kanüle 1, den vorderen Kanülenabschnitt oder beide Kanülenabschnitte 1a, 1b und/oder die Düsenhülse 8 oder 8g. Keramik eignet sich aus den bereits genannten Gründen auch für die Außenteile der Kanüle 1, die mit dem zu behandelnden Körper in Berührungskontakt treten können, z. B. der Kanülenkörper oder die Düsenhülse 8g.

Als Keramikmaterial eignet sich technische Keramik, z. B. Borkarbid, Zirkonoxid, Siliciumkarbid oder Aluminiumoxid. Edelstahl ist ein solcher legierter Stahl, dessen Legierungsbestandteile größer sind als etwa 5%, und der außerdem rost- und säurebeständig ist. Als Hartmetall eignet sich vorzugsweise gesintertes Hartmetall. Bezüglich des Kunststoffs wird auf die bereits beschriebenen verschleißfesten Kunststoffe verwiesen, die sich vorzüglich für die genannten Teile eignen.

## Patentansprüche

1. Kanüle (1) für ein medizinisches oder dentalmedizinisches Handstück (61b) zum Aussprühen eines Strömungsmittels (6), das abrasiv wirksame Partikel enthält, mit
- einem Kanülenfuß (2),
- einem sich vom Kanülenfuß (2) im Wesentlichen gerade nach vorne erstreckenden Kanülenschaft (3),
- und einer seitwärts gerichteten Auslassdüse (4) im vorderen Endbereich des Kanülenschafts (3),
- wobei sich im Kanülenschaft (3) ein erster Kanalabschnitt (7a) einer ersten Zuführungsleitung (5) axial nach vorne erstreckt, von dem sich ein zweiter Kanalabschnitt (7b) der ersten Zuführungsleitung (5) seitwärts zur Auslassdüse (4) erstreckt,
- wobei sich in der Kanüle (1) eine zweite Zuführungsleitung (21) von einer Einlassöffnung (21a) im Bereich des Kanülenfußes (2) erstreckt,
- und wobei ein erster Kanalabschnitt (21b) der zweiten Zuführungsleitung (21) im hinteren Endbereich auf einem Längsabschnitt sich im wesentlichen parallel zum ersten Kanalabschnitt (7a) der ersten Zuführungsleitung (5) nach vorne erstreckt,
**dadurch gekennzeichnet,**
**dass** die zweite Zuführungsleitung (21) sich zu einer den zweiten Kanalabschnitt (7b) der ersten Zuführungsleitung (5) im Bereich der Auslassdüse (4) umgebenden Ringdüse (21c) erstreckt,
wobei der erste Kanalabschnitt (21b) der zweiten Zuführungsleitung (21) durch einen Ringspalt (21d) gebildet ist, der eine den ersten Kanalabschnitt (7a) bildende und in den Kanülenschaft (3) eingesetzte gerade Kanalhülse (22) umgibt und in seinem vorderen Endbereich durch wenigstens einen weiterführenden Verbindungskanal (58) mit der Ringdüse (21c) verbunden ist.

2. Kanüle nach Anspruch 1,
**dadurch gekennzeichnet,**
**dass** der Ringspalt (21d) **dadurch** gebildet ist, dass die Kanalhülse (22) von einem hinteren Endbereich nach vorne durchgehend ringförmig verjüngt ist.

3. Kanüle nach Anspruch 1 oder 2,
**dadurch gekennzeichnet,**
**dass** in der zweiten Zuführungsleitung (21) wenigstens ein Rückstrom-Sperrventil (35a, 35b) angeordnet ist.

4. Kanüle nach Anspruch 3,
**dadurch gekennzeichnet,**
**dass** das Rückstrom-Sperrventil (35a, 35b) ein Membran-Ventil oder ein Lippen-Ventil ist.

5. Kanüle nach einem der Ansprüche 3 oder 4,
**dadurch gekennzeichnet,**
**dass** das Rückstrom-Sperrventil (35a, 35b) im Bereich der Auslassdüse (4) und/oder im mittleren Bereich der Kanüle (1) angeordnet ist bzw. sind.

6. Kanüle nach Anspruch 4 oder 5,
**dadurch gekennzeichnet,**
**dass** das Rückstrom-Sperrventil (35a) eine ringförmige Membran (52) aufweist, deren innerer oder äußerer Rand axial fixiert ist und der jeweils andere Rand (53) mit einer Ringfläche (8) dichtend zusammenwirkt und durch den Strömungsdruck des Strömungsmittels (6) axial elastisch ausgebogen wird.

7. Kanüle nach einem der Ansprüche 3 bis 6,
**dadurch gekennzeichnet,**
**dass** das Rückstrom-Sperrventil (35b) von hinten zugänglich in einer rückseitigen Ausnehmung (41a) angeordnet ist, die vorzugsweise von einem Verschlussteil (37) verschlossen ist.

8. Kanüle nach einem der vorherigen Ansprüche 3 bis 7,
**dadurch gekennzeichnet,**
**dass** der weiterführende Verbindungskanal (58) einen sich vom vorderen Endbereich des Ringspaltes (21d) erstreckenden Querkanal (36) aufweist.

9. Kanüle nach Anspruch 8,
**dadurch gekennzeichnet,**
**dass** die zweite Zuführungsleitung (21) einen sich vom Querkanal (36) nach vorne erstreckenden und bezüglich dem ersten Kanalabschnitt (7a) der ersten Zuführungsleitung (5) achsparallelen Zuführungsleitungsabschnitt (21g) aufweist.

10. Kanüle nach Anspruch 9,
**dadurch gekennzeichnet,**
**daß** das Rückstrom-Sperrventil (35b) im achsparallelen Zuführungsleitungsabschnitt (21g) angeordnet ist.

11. Kanüle nach Anspruch 9 und 10,
**dadurch gekennzeichnet,**
**dass** der achsparallele Zuführungsleitungsabschnitt (21g) von hinten zugänglich ist.

12. Kanüle nach Anspruch 10 und 11,
**dadurch gekennzeichnet,**
**dass** das Rückstrom-Sperrventil (35b) von hinten einführbar und austauschbar ist.

13. Kanüle nach einem der Ansprüche 7 bis 12,
**dadurch gekennzeichnet,**
**dass** das Verschlussteil (37) von hinten lösbar mit der Kanüle (1) verbunden ist, vorzugsweise durch eine Schnellverbindungsvorrichtung (41).

14. Kanüle nach einem der vorherigen Ansprüche,
**dadurch gekennzeichnet,**
**dass** die Auslassdüse (4) eine von der Ringdüse (21c) umgebene Düsenhülse (8) aufweist, die in einem seitlich abstehenden Ansatz (3a) der Kanüle (1) versenkt angeordnet ist.

## Claims

1. Cannula (1) for a medical or dental-medical handpiece (6 1 b) for spraying a flow medium (6) that contains abrasively effective particles, having
- a cannula foot (2),
- a cannula shaft (3) extending substantially straight forwardly from the cannula foot (2),
- and an outlet nozzle (4) in the forward end region of the cannula shaft (3), directed sideways,
- wherein in the cannula shaft (3) a first channel section (7a) of a first delivery line (5) extends axially forwardly, from which there extends a second channel section (7b) of the first delivery line (5) sideways to the outlet nozzle (4),
- wherein in the cannula (1) there extends a second delivery line (21) from an inlet opening (21a) in the region of the cannula foot (2),
- and wherein a first channel section (21b) of the second delivery line (21) extends forwardly in substance parallel to the first channel section (7a) of the first delivery line (5) over a length section in the rearward end region,
**characterised in that**
the second delivery line (21) extends to an annular nozzle (21c) surrounding the second channel section (7b) of the first delivery line (5) in the region of the outlet nozzle (4),
wherein the first channel section (21b) of the second delivery line (21) is formed by an annular gap (2 1 d) which surrounds a straight channel sleeve (22) emplaced in the cannula shaft (3) and forming the first channel section (7a) and is connected in its forward end region with the annular nozzle (21 c) by means of at least one continuing connection channel (58).

2. Cannula according to claim 1,
**characterized in that**
the annular gap (2 1 d) is formed by a continuous annular taper of the channel sleeve (22) from a rearward end region forwardly.

3. Cannula according to claim 1 or 2,
**characterized in that**
in the second delivery line (21) there is arranged at least one return flow blocking valve (35a, 35b).

4. Cannula according to claim 3,
**characterized in that**
the return flow blocking valve (35a, 35b) is a membrane valve or a lip valve.

5. Cannula according to claim 3 or 4,
**characterized in that**
the return flow blocking valve (35a, 35b) is or are arranged in the region of the outlet nozzle (4) and/or in the middle region of the cannula (1).

6. Cannula according to claim 4 or 5,
**characterized in that**
the return flow blocking valve (35a) has a ring-like membrane (52), the inner or outer edge of which is axially fixed, and the respective other edge (53) cooperates sealingly with a ring surface (8) and is axially elastically bent outwardly through the flow pressure of the flow medium (6).

7. Cannula according to any of claims 3 to 6,
**characterized in that**
the return flow blocking valve (35b) is arranged so that it is accessible from the rear in a rearward recess (41a), which is preferably closed by a closure part (37).

8. Cannula according to any of preceding claims 3 to 7,
**characterized in that**
the continuing connection channel (58) has a transverse channel (36) extending from the forward end region of the ring gap (21 d).

9. Cannula according to claim 8,
**characterized in that**
the second delivery line (21) has a delivery line section (21g) extending forwardly from the transverse channel (36) and axis-parallel with respect to the first channel section (7a) of the first delivery line (5).

10. Cannula according to claim 9,
**characterized in that**
the return flow blocking valve (35b) is arranged in the axis-parallel delivery line section (21g).

11. Cannula according to claim 9 and 10,
**characterized in that**
the axis-parallel delivery line section (21g) is accessible from the rear.

12. Cannula according to claim 10 and 11,
**characterized in that**
the return flow blocking valve (35b) can be introduced and exchanged from the rear.

13. Cannula according to any of claims 7 to 12,
**characterized in that**
the closure part (37) is releasably connected with the cannula (1) from the rear, preferably by means of a quick-fastening connection device (41).

14. Cannula according to any preceding claim,
**characterized in that**
the outlet nozzle (4) has a nozzle sleeve (8) surrounded by the ring nozzle (21c), which is arranged sunken in a shoulder (3a) of the cannula (1) standing out to the side.

## Revendications

1. Canule (1) pour une pièce à main médicale ou médico-dentaire (61 b) pour pulvériser une substance d'écoulement (6) qui contient des particules abrasives efficaces, avec
- une base de canule (2),
- une tige de canule (3) s'étendant à partir de la base de canule (2) de façon essentiellement rectiligne vers l'avant
- et une buse d'évacuation (4) orienté sur le côté dans la région terminale avant de la tige de canule (3),
- une première section de canal (7a) d'une première conduite d'alimentation (5) s'étendant de manière axiale vers l'avant dans la tige de canule (3), à partir de laquelle section, une deuxième section de canal (7b) de la première conduite d'alimentation (5) s'étend sur le côté en direction de la buse d'évacuation (4),
- une deuxième conduite d'alimentation (21) s'étendant dans la canule (1) à partir d'un orifice d'admission (21 a) dans la région de la base de la canule (2),
- et une première section de canal (21b) de la deuxième conduite d'alimentation (21) s'étendant vers l'avant dans la région terminale arrière sur une section longitudinale de façon essentiellement parallèle à la première section de canal (7a) de la première conduite d'alimentation (5),
**caractérisée en ce**
**que** la deuxième conduite d'alimentation (21) s'étend jusqu'à une buse annulaire (21 c) entourant la deuxième section de canal (7b) de la première conduite d'alimentation (5) dans la région de la buse d'évacuation (4),
la première section de canal (21 b) de la deuxième conduite d'alimentation (21) étant formée à travers un passage annulaire (21 d) qui entoure un manchon de canal (22) rectiligne placé dans la tige de canule (3) et formant la première section de canal (7a) et qui est reliée dans sa région terminale avant par au moins un canal de raccordement (58) continu à la buse annulaire (21 c).

2. Canule selon la revendication 1,
**caractérisée en ce**
**que** le passage annulaire (21d) est formé par le fait que le manchon de canal (22) est réduit en forme d'anneau de façon continue vers l'avant à partir d'une région terminale arrière.

3. Canule selon la revendication 1 ou 2,
**caractérisée en ce**
**qu'**au moins un clapet anti-retour (35a, 35b) est disposé dans la deuxième conduite d'alimentation (21).

4. Canule selon la revendication 3,
**caractérisée en ce**
**que** le clapet anti-retour (35a, 35b) est un clapet à membrane ou un clapet à lèvres.

5. Canule selon l'une quelconque des revendications 3 ou 4,
**caractérisée en ce**
**que** le/les clapet(s) anti-retour (35a, 35b) est disposé et/ou sont disposés dans la région de la buse d'évacuation (4) et/ou dans la région centrale de la canule (1).

6. Canule selon la revendication 4 ou 5,
**caractérisée en ce**
**que** le clapet anti-retour (35a) comprend une membrane annulaire (52) dont le bord intérieur ou extérieur est fixé de manière axiale et dont l'autre bord (53) coopère respectivement avec une surface annulaire (8) de façon étanche et est plié de manière axiale et flexible par la pression d'écoulement de la substance d'écoulement (6).

7. Canule selon l'une quelconque des revendications 3 à 6,
**caractérisée en ce**
**que** le clapet anti-retour (35b) arrière est disposé accessible dans un évidement situé à l'arrière (41 a) qui est bouché de préférence par un élément d'obturation (37).

8. Canule selon l'une quelconque des revendications précédentes 3 à 7,
**caractérisée en ce**
**que** le canal de raccordement (58) continu comprend montre un canal transversal (36) s'élargissant à partir de la région terminale avant du passage annulaire (21 d).

9. Canule selon la revendication 8,
**caractérisée en ce**
**que** la deuxième conduite d'alimentation (21) comprend une section de conduite d'alimentation (21g) s'étendant ver l'avant à partir du canal transversal (36) et d'axes parallèles par rapport à la première section de canal (7a) de la première conduite d'alimentation (5).

10. Canule selon la revendication 9,
**caractérisée en ce**
**que** le clapet anti-retour (35b) est disposé dans la section de la conduite d'alimentation d'axes parallèles (21g).

11. Canule selon la revendication 9 et 10,
**caractérisée en ce**
**que** la section de la conduite d'alimentation d'axes parallèles (21g) est accessible par l'arrière.

12. Canule selon la revendication 10 et 11,
**caractérisée en ce**
**que** le clapet anti-retour (35b) peut être introduit par l'arrière et peut être remplacé.

13. Canule selon l'une quelconque des revendications 7 à 12,
**caractérisée en ce**
**que** l'élément d'obturation (37) est relié à partir de l'arrière de façon détachable à la canule (1), de préférence par un dispositif de raccordement rapide (41).

14. Canule selon l'une quelconque des revendications précédentes,
**caractérisée en ce**
**que** la buse d'évacuation (4) comprend un manchon de buse (8) entouré de la buse annulaire (22c) qui est disposé de façon encastrée dans un appendice (3a) de la canule (1) faisant saillie latéralement.
